# EUROPEAN PATENT APPLICATION

(11) **EP 4 749 255 A1**
(43) Date of publication of application: **27.05.2026**
(21) Application number: 24923967.4
(22) Date of filing: 06.02.2024
(51) Int. Cl.: G01L 17/00, B60C 23/04

(54) **PRESSURE DETECTION DEVICE AND VALVE CAP ASSEMBLY STRUCTURE**

(71) Applicant: Pacific Industrial Co., Ltd., Ogaki-shi, Gifu 503-8603 (JP)
(72) Inventor: SUGINO Takumi, Ogaki-shi, Gifu 503-8603 (JP); TSUJITA Yasuhisa, Ogaki-shi, Gifu 503-8603 (JP); NAMIKAWA Reiya, Ogaki-shi, Gifu 503-8603 (JP)
(74) Representative: Daub, Thomas
(86) International application number: PCT/JP2024/003833
(87) International publication number: WO 2025/169285

(57) **Abstract**

A pressure detection device (20) comprises a housing (22) that is fastened to one end (12) of a valve stem (11), a seal member (37) that seals between the valve stem (11) and the housing (22), and a pressing part (30) that opens the valve core (15) by pressing the shaft end (18) of the valve core (15). The housing (22) is provided with an outer wall (24) provided so as to cover the outer circumferential surface of the valve stem (11). The pressing part (30) has a contact surface (31) that comes into contact with the shaft end (18). In a state before the housing (22) is fastened to the valve stem (11), in which the one end (12) of the valve stem (11) and the housing (22) are aligned in the axial direction of the valve stem (11), the distance (d11) from the seal member (37) to the one end (12) of the valve stem (11) is shorter than the distance (d12) from the contact surface (31) to the shaft end (18).

## Description

### TECHNICAL FIELD

The present disclosure relates to a pressure detection device, and an attaching structure of a valve cap.

### BACKGROUND ART

Patent Literature 1 discloses a valve cap configured to be attached to a valve. The valve includes a valve stem, and a valve core accommodated in the valve stem. An external thread is formed in an outer circumferential surface of the valve stem. The valve core includes a shaft. When the shaft is pushed, the valve core opens.

The valve cap includes a housing, a pushing portion that pushes the shaft, and a sealing member that seals a gap between the valve cap and the valve stem. The housing is tubular. An internal thread is formed in an inner circumferential surface of the housing. When attaching the valve cap to the valve, the valve cap is fastened to the valve by engaging the internal thread of the housing with the external thread of the valve stem. In an attached state, the shaft is pushed by the pushing portion such that the valve core is open. Accordingly, the interior of the valve stem is in communication with the interior of the housing.

### CITATION LIST

### Patent Literature

Patent Literature 1: JP2004-25923A

### SUMMARY OF INVENTION

### Technical Problem

When attaching the valve cap to the valve stem, the pushing portion gradually pushes the shaft as the internal thread engages with the external thread. If a gap between the valve stem and the valve cap is not sealed by the sealing member when the valve core opens, gas may leak through the gap.

### Solution to Problem

In accordance with a first aspect of the present disclosure, a pressure detection device configured to be attached to a valve is provided. The valve includes a valve stem in which a valve core is accommodated. The pressure detection device includes a housing, a pressure sensor, a sealing member, and a pushing portion. The housing is configured to be fastened to an end of the valve stem. The pressure sensor is configured to detect pressure inside the housing. The sealing member is configured to seal a gap between the valve stem and the housing. The pushing portion is configured to push a shaft end of the valve core so as to open the valve core. The housing includes an outer wall configured to cover an outer circumferential surface of the valve stem. The pushing portion includes a contact surface configured to contact the shaft end. In a state in which the end of the valve stem is aligned with the housing in an axial direction of the valve stem before the housing is fastened to the valve stem, a distance from the sealing member to the end of the valve stem is shorter than a distance from the contact surface to the shaft end.

As the housing is fastened to the valve stem, the sealing member comes into contact with the end of the valve stem before the contact surface contacts the shaft end. This allows the sealing member to seal the gap between the valve stem and the housing before the pushing portion begins to push the shaft end. Since the gap between the valve stem and the housing is already sealed when the valve core opens, gas will not leak due to opening the valve core.

In the above pressure detection device, the valve includes a tire valve. The housing includes a wall portion and a tubular inner wall. The wall portion is configured to contact the end of the valve stem. The tubular inner wall projects from the wall portion toward an interior of the valve stem. The sealing member is configured to be located between an outer circumferential surface of the inner wall and an inner circumferential surface of the valve stem. The outer wall includes an outer wall end having an opening that receives the valve stem. A distance from the outer wall end to the sealing member is shorter than a distance from the outer wall end to the contact surface.

The above pressure detection device further includes a holder and a spring. The holder holds the sealing member. The spring biases the holder toward the valve stem to slide the holder and the sealing member and force the sealing member against the outer wall. In a state in which the sealing member is forced against the outer wall, a distance from the sealing member to the end of the valve stem is shorter than a distance from the contact surface to the shaft end.

In accordance with a second aspect of the present disclosure, an attaching structure of a valve cap is provided. The valve cap is configured to be attached to a valve. The valve includes a valve stem in which a valve core is accommodated. The valve cap includes a housing, a sealing member, and a pushing portion. The housing is configured to be fastened to an end of the valve stem. The sealing member is configured to seal a gap between the valve stem and the housing. The pushing portion is configured to push a shaft end of the valve core so as to open the valve core. The housing includes an outer wall configured to cover an outer circumferential surface of the valve stem. The pushing portion includes a contact surface configured to contact the shaft end. In a state in which the end of the valve stem is aligned with the housing in an axial direction of the valve stem before the housing is fastened to the valve stem, a distance from the sealing member to the end of the valve stem is shorter than a distance from the contact surface to the shaft end.

As the housing is fastened to the valve stem, the sealing member comes into contact with the end of the valve stem before the contact surface contacts the shaft end. This allows the sealing member to seal the gap between the valve stem and the housing before the pushing portion begins to push the shaft end. Since the gap between the valve stem and the housing is already sealed when the valve core opens, gas will not leak due to opening the valve core.

### BRIEF DESCRIPTION OF DRAWINGS

[Fig. 1] Fig. 1 is a cross-sectional view of a pressure detection device in a state in which a housing is fastened to a valve stem.
[Fig. 2] Fig. 2 is a cross-sectional view of the pressure detection device in a state before the housing is fastened to the valve stem.
[Fig. 3] Fig. 3 is a cross-sectional view of the pressure detection device in a process of fastening the housing to the valve stem.
[Fig. 4] Fig. 4 is a cross-sectional view of a pressure detection device in a state in which a housing is fastened to a valve stem.
[Fig. 5] Fig. 5 is a cross-sectional view of the pressure detection device in a state before the housing is fastened to the valve stem.
[Fig. 6] Fig. 6 is a cross-sectional view of the pressure detection device in a process of fastening the housing to the valve stem.
[Fig. 7] Fig. 7 is a cross-sectional view showing a modified example of the housing.
[Fig. 8] Fig. 8 is a cross-sectional view showing a modified example of the housing.

### DESCRIPTION OF EMBODIMENTS

### [First Embodiment]

A first embodiment of a pressure detection device and an attaching structure of a valve cap will now be described.

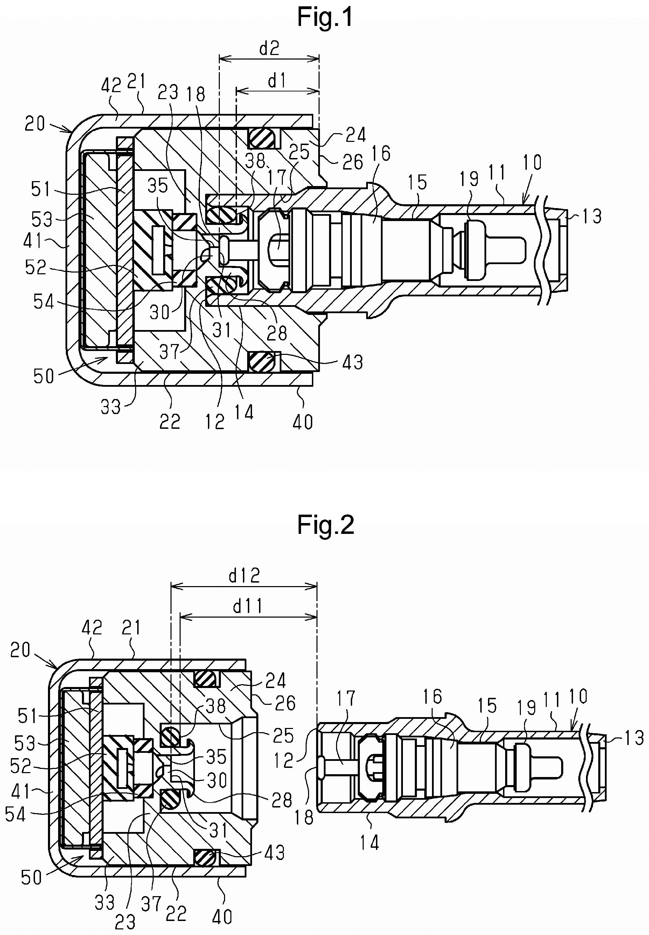

As shown in Fig. 1, a pressure detection device 20 is configured to be fastened to a valve 10. The pressure detection device 20 and the valve 10 form a valve device. The valve 10 may be a tire valve attached to a wheel for gas injection into a tire.

The valve 10 includes a tubular valve stem 11 and a valve core 15. The valve stem 11 is tubular. The valve stem 11 is made of, for example, metal. The valve stem 11 includes a first end 12 and a second end 13. The first end 12 is an end of the valve stem 11. An external thread 14 is formed in an outer circumferential surface of the valve stem 11. The external thread 14 extends in a predetermined range between the first end 12 and the second end 13. When the valve stem 11 is attached to a wheel, the first end 12 is located outside the tire. When the valve stem 11 is attached to a wheel, the second end 13 is located inside the tire.

The valve core 15 is accommodated in the valve stem 11. The valve core 15 includes a base 16, a shaft 17, and a valve body 19. The base 16 is a tubular member. An axial direction of the base 16 coincides with an axial direction of the valve stem 11. A gap between an outer circumferential surface of the base 16 and an inner circumferential surface of the valve stem 11 is sealed.

The shaft 17 extends through the base 16. An axial direction of the shaft 17 coincides with the axial direction of the base 16. The shaft 17 includes a shaft end 18. The shaft end 18 is one of two opposite ends of the shaft 17. The shaft end 18 projects from the base 16 toward the first end 12.

The valve body 19 is arranged at a part of the shaft 17 that projects from the base 16 toward the second end 13. When the valve body 19 is tightly fitted to the base 16, the base 16 is closed. When the valve body 19 is separated from the base 16, the base 16 is open.

The shaft 17 is movable in the axial direction of the base 16. The shaft 17 is biased toward the first end 12 by a spring (not shown). Accordingly, when the valve body 19 is tightly fitted to the base 16, the base 16 is closed. A state in which the valve body 19 is tightly fitted to the base 16 corresponds to a closed valve state in which the valve stem 11 is airtight. A state in which the valve body 19 is separated from the base 16 corresponds to an open valve state in which gas may flow through the valve stem 11. When the valve body 19 is tightly fitted to the base 16, the valve core 15 is open. When the valve body 19 is separated from the base 16, the valve core 15 is closed.

The pressure detection device 20 includes a valve cap 21 and a sensor unit 50.

### <Valve Cap>

The valve cap 21 includes a housing 22. The housing 22 is made of, for example, metal. The housing 22 includes a wall portion 23, and an outer wall 24 extending from the wall portion 23. The wall portion 23 is circular. The outer wall 24 is cylindrical. The wall portion 23 is an end wall arranged at an end of the outer wall 24. An internal thread 25 is formed in an inner circumferential surface of the outer wall 24. The outer wall 24 includes an outer wall end 26. The outer wall end 26 is an end of the outer wall 24 opposite to where the wall portion 23 is arranged. The outer wall end 26 is an open end having an opening that receives the valve stem 11. The valve cap 21 and the valve 10 form a valve device.

The housing 22 includes an inner wall 28. The inner wall 28 extends from the wall portion 23 in a direction parallel to the outer wall 24. The inner wall 28 has an annular cross-sectional shape. The inner wall 28 has a distal end that is flared outward in a radial direction of the inner wall 28. The outer wall 24 and the inner wall 28 are concentric.

The housing 22 includes a pushing portion 30. The pushing portion 30 projects from the wall portion 23 in a direction parallel to the outer wall 24. The pushing portion 30 is arranged inside the inner wall 28. The pushing portion 30 includes a contact surface 31. The contact surface 31 is a distal end surface of the pushing portion 30.

The housing 22 includes a support portion 33 that extends from the wall portion 23. The support portion 33 has an annular cross-sectional shape. The support portion 33 extends from the wall portion 23 in a direction opposite to the outer wall 24.

The housing 22 includes a pressure inlet 35. The pressure inlet 35 is a through hole that connects a region surrounded by the outer wall 24 and a region surrounded by the support portion 33. For example, the pressure inlet 35 extends through the pushing portion 30 and the wall portion 23.

The valve cap 21 includes a sealing member 37. The sealing member 37 is, for example, an O-ring. The sealing member 37 is tubular. The sealing member 37 is arranged around the inner wall 28. The sealing member 37 is located between an outer circumferential surface of the inner wall 28 and the inner circumferential surface of the outer wall 24. The sealing member 37 includes a seal end 38. The seal end 38 is an end of the sealing member 37 located opposite to the wall portion 23. A distance d1 from the outer wall end 26 to the sealing member 37 is shorter than a distance d2 from the outer wall end 26 to the contact surface 31. The distance d1 from the outer wall end 26 to the sealing member 37 corresponds to the distance from the outer wall end 26 to the seal end 38.

The valve cap 21 includes a cover 40. The cover 40 includes a cover wall portion 41 and a cover circumferential wall 42. The cover wall portion 41 is disc-shaped. The cover circumferential wall 42 is cylindrical. The cover 40 is attached to the housing 22, and covers the housing 22. An inner surface of the cover circumferential wall 42 faces an outer circumferential surface of the outer wall 24. The cover 40 accommodates the housing 22, such that the cover circumferential wall 42 extends from the cover wall portion 41 in a direction parallel to the outer wall 24 extending from the wall portion 23.

The valve cap 21 includes a cover seal member 43 that seals a gap between the cover 40 and the housing 22. The cover seal member 43 is arranged between the cover circumferential wall 42 and the outer wall 24.

### <Sensor Unit>

The sensor unit 50 includes a substrate 51, a pressure sensor 52, and a battery 53. The pressure sensor 52 and the battery 53 are mounted on the substrate 51. The substrate 51 is supported by the support portion 33. A transmission circuit may be mounted on the substrate 51. The transmission circuit is configured to transmit a detection result of the pressure sensor 52 to a receiver. The receiver may be a portable terminal carried by a user or a device installed in a vehicle. The transmission circuit transmits the detection result of the pressure sensor 52 to the receiver, so that the receiver may monitor the pressure.

The pressure sensor 52 is arranged in a region surrounded by the support portion 33. The pressure sensor 52 is configured to detect the pressure inside the housing 22. The battery 53 is arranged between the substrate 51 and the cover wall portion 41. The battery 53 serves as a power supply for the sensor unit 50. For example, the battery 53 serves as a power supply for the pressure sensor 52 and the transmission circuit.

The sensor unit 50 includes a sensor seal member 54. The sensor seal member 54 is arranged between the pressure sensor 52 and the wall portion 23. The sensor seal member 54 is tubular. The sensor seal member 54 is arranged around the pressure inlet 35. When pressure is applied to the pressure sensor 52 through the pressure inlet 35, the pressure sensor 52 detects the pressure. In a state in which the interior of the housing 22 is in communication with the interior of the valve stem 11, the pressure inside the housing 22 is the same as the pressure inside the valve stem 11. Accordingly, the pressure detected by the pressure sensor 52 indicates the pressure inside the valve stem 11. In a case in which the valve 10 is a tire valve and the valve core 15 is open, the pressure sensor 52 detects the tire pressure.

The valve cap 21 is configured to be fastened to the first end 12 of the valve stem 11. The valve cap 21 is fastened to the valve stem 11 by engaging the internal thread 25 formed in the inner circumferential surface of the outer wall 24 with the external thread 14 formed in the outer circumferential surface of the valve stem 11. This attaches the valve cap 21 to the valve 10. That is, the pressure detection device 20 is attached to the valve 10.

In a state in which the valve cap 21 is fastened to the first end 12 of the valve stem 11, the contact surface 31 of the pushing portion 30 is in contact with the shaft end 18. The pushing portion 30 pushes the shaft end 18 from the first end 12 toward the second end 13 to move the shaft 17 in the axial direction. This opens the valve core 15. The wall portion 23 is aligned with the valve stem 11 in the axial direction of the valve stem 11. The outer wall 24 covers the outer circumferential surface of the valve stem 11. The sealing member 37 is located between the inner circumferential surface of the valve stem 11 and the outer circumferential surface of the inner wall 28. The first end 12 of the valve stem 11 is in contact with the wall portion 23. The inner wall 28 projects toward the interior of the valve stem 11.

Fig. 2 shows an example of a state in which the first end 12 of the valve stem 11 is aligned with the housing 22 in the axial direction of the valve stem 11 before the housing 22 is fastened to the valve stem 11. In this example, the axial direction of the valve stem 11 coincides with the axial direction of the outer wall 24. In this state, a distance d11 from the sealing member 37 to the first end 12 of the valve stem 11 is shorter than a distance d12 from the contact surface 31 to the shaft end 18. The distance d11 from the sealing member 37 to the first end 12 of the valve stem 11 corresponds to the distance from the seal end 38 to the first end 12 of the valve stem 11. In a state before the housing 22 is fastened to the valve stem 11, the shaft end 18 is located at the same position or substantially the same position as the first end 12 of the valve stem 11 in the axial direction of the valve stem 11.

### [Operation of the First Embodiment]

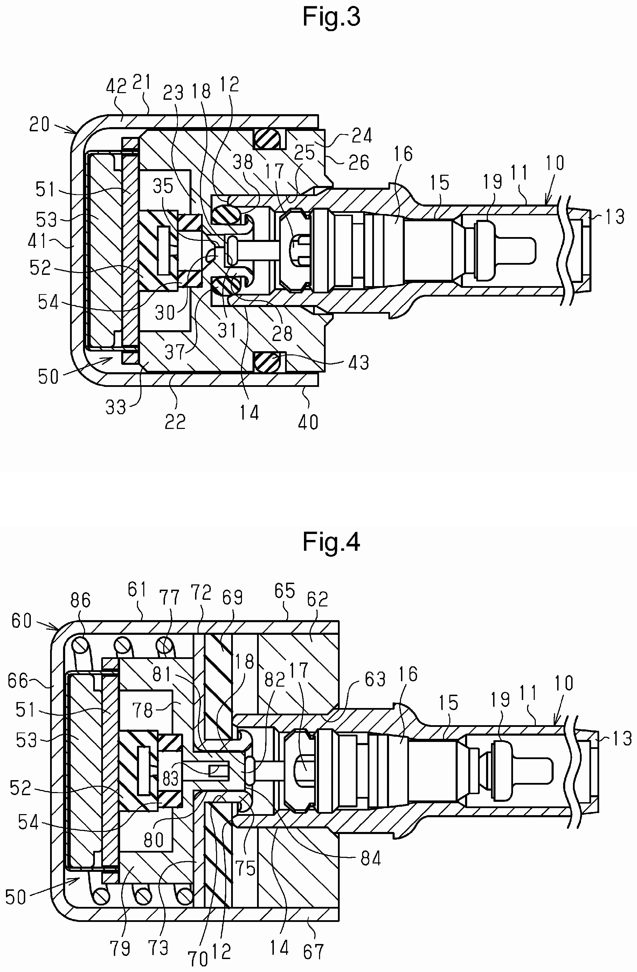

In a state before the housing 22 is fastened to the valve stem 11, the distance d11 from the sealing member 37 to the first end 12 of the valve stem 11 is shorter than the distance d12 from the contact surface 31 to the shaft end 18. Therefore, as shown in Fig. 3, when inserting the valve stem 11 into the valve cap 21 by engaging the internal thread 25 with the external thread 14, the sealing member 37 comes into contact with the first end 12 of the valve stem 11 before the contact surface 31 contacts the shaft end 18. The sealing member 37 seals the gap between the valve stem 11 and the housing 22 as the sealing member 37 contacts the first end 12 of the valve stem 11. In this manner, the gap between the valve stem 11 and the housing 22 is already sealed when the pushing portion 30 begins to push the shaft end 18 to open the valve core 15. This avoids gas leakage through the gap between the valve stem 11 and the housing 22 when opening the valve core 15. In a case in which the valve 10 is a tire valve, the above-described structure avoids gas leakage that may lower the tire pressure.

### [Advantages of the First Embodiment]

(1-1) In a state before the housing 22 is fastened to the valve stem 11, the distance d11 from the sealing member 37 to the first end 12 of the valve stem 11 is shorter than the distance d12 from the contact surface 31 to the shaft end 18. The sealing member 37 seals the gap between the valve stem 11 and the housing 22 before the pushing portion 30 pushes the shaft end 18. Since the gap between the valve stem 11 and the housing 22 is already sealed when the valve core 15 opens, gas will not leak due to opening the valve core 15.

(1-2) The distance d1 from the outer wall end 26 to the sealing member 37 is shorter than the distance d2 from the outer wall end 26 to the contact surface 31. In a case in which the valve 10 is a tire valve, the shaft end 18 is located at the same position or substantially the same position as the first end 12 of the valve stem 11 in the axial direction of the valve stem 11. In such a case, the above-described setting of the distance d1 from the outer wall end 26 to the seal end 38 and the distance d2 from the outer wall end 26 to the contact surface 31 allows the sealing member 37 to seal the gap between the valve stem 11 and the housing 22 before the pushing portion 30 begins to push the shaft end 18.

(1-3) The first end 12 of the valve stem 11 contacts the wall portion 23. If a sealing member is arranged between the first end 12 of the valve stem 11 and the wall portion 23, the sealing member may be compressed to seal a gap between the valve stem 11 and the housing 22. In this case, an axial force acting on the valve stem 11 and the housing 22 is dependent on the compression reaction force of the sealing member. When the compression reactive force of the sealing member reduces, the reduction may lower the axial force and cause gas leakage. In this respect, when a sealing member is not arranged between the first end 12 of the valve stem 11 and the wall portion 23, the axial force is not affected by the compression reaction force of the sealing member. This avoids a situation in which the axial force is lowered by a reduction in the compression reaction force of a sealing member.

(1-4) The sealing member 37 is an O-ring. The O-ring has a self-sealing property. In other words, the sealing force of the O-ring is not dependent on its compression reaction force. This ensures a long-lasting reliability of the sealing member 37.

(1-5) The sealing member 37 is located between the inner circumferential surface of the valve stem 11 and the outer circumferential surface of the inner wall 28. Therefore, even when the axial force lowers, loosening of the housing 22 is resisted by a frictional force acting on the interface between the inner circumferential surface of the valve stem 11 and the sealing member 37 and a frictional force acting on the interface between the outer circumferential surface of the inner wall 28 and the sealing member 37.

### [Second Embodiment]

A second embodiment of a pressure detection device and an attaching structure of a valve cap will now be described.

As shown in Fig. 4, a pressure detection device 60 includes a valve cap 61 and the sensor unit 50. The valve 10 that receives the pressure detection device 60 has the same structure as that of the first embodiment.

The valve cap 61 includes a housing 62. The housing 62 is cylindrical. An internal thread 63 is formed in an inner circumferential surface of the housing 62. The housing 62 defines an outer wall.

The valve cap 61 includes a cover 65. The cover 65 includes a cover wall portion 66 and a cover circumferential wall 67. The cover wall portion 66 is circular. The cover circumferential wall 67 is cylindrical. The cover 65 is attached to the housing 62, and covers the housing 62. An inner surface of the cover circumferential wall 67 faces an outer circumferential surface of the housing 62.

The valve cap 61 includes a sealing member 69. The sealing member 69 is arranged in a region defined by the cover 65 and the housing 62. The sealing member 69 is circular. The sealing member 69 includes a through hole 70. The through hole 70 is located at a central part of the sealing member 69. The sealing member 69 has the same outer diameter as the housing 62. The sealing member 69 faces the housing 62. The sealing member 69 is, for example, a gasket. An outer circumferential surface of the sealing member 69 is tightly fitted to the inner surface of the cover circumferential wall 67.

The valve cap 61 includes a holder 72. The holder 72 is arranged in a region defined by the cover 65 and the housing 62. The holder 72 includes a main body 73 and a projection 75. The main body 73 is circular. The main body 73 has the same outer diameter as the sealing member 69. The projection 75 is cylindrical. The projection 75 is located at a central part of the main body 73. The projection 75 has a distal end that is flared outward in a radial direction of the projection 75. The main body 73 is arranged on the sealing member 69. The projection 75 extends through the through hole 70. When the projection 75 is inserted through the sealing member 69, the holder 72 holds the sealing member 69. The holder 72 and the sealing member 69, which is held by the holder 72, are movable in the axial direction of the cover circumferential wall 67.

The valve cap 61 includes a pushing member 77. The pushing member 77 is arranged in a region defined by the cover 65 and the housing 62. The pushing member 77 includes a main body 78, a support portion 79, and a pushing portion 80. The main body 78 is disc-shaped. The support portion 79 is cylindrical. The support portion 79 extends from an outer edge of the main body 78 in a thickness direction of the main body 73. The support portion 79 has a smaller outer diameter than the holder 72.

The pushing portion 80 includes a cylindrical first section 81, and a second section 82 arranged at a distal end of the first section 81. The first section 81 extends in a thickness direction of the main body 78. The first section 81 is arranged at a central part of the main body 78. The first section 81 extends in a direction opposite to the support portion 79. The first section 81 includes a pressure inlet 83. The pressure inlet 83 extends through the first section 81. The second section 82 closes an end of the first section 81. The second section 82 includes a contact surface 84. The contact surface 84 is a distal end surface of the pushing portion 80. The main body 78 of the pushing member 77 is arranged on the main body 73 of the holder 72. The pushing portion 80 projects into the interior of the projection 75.

The valve cap 61 includes a spring 86. The spring 86 is arranged in a region defined by the cover 65 and the housing 62. The spring 86 is located between the cover wall portion 66 and the holder 72. More specifically, the spring 86 is located between the cover wall portion 66 and the holder 72, and extends between the support portion 79 and the cover circumferential wall 67. The spring 86 biases the holder 72 and the sealing member 69, which is held by the holder 72, toward the housing 62. Therefore, the spring 86 slides the holder 72 and the sealing member 69 to force the sealing member 69 against the housing 62.

The sensor unit 50 has the same configuration as that of the first embodiment. The substrate 51 is supported by the support portion 79. The pressure sensor 52 is arranged in a region surrounded by the support portion 79. The sensor seal member 54 is located between the main body 73 and the pressure sensor 52. The battery 53 is arranged between the substrate 51 and the cover wall portion 66.

The housing 62 is configured to be fastened to the first end 12 of the valve stem 11. The housing 62 is fastened to the valve stem 11 by engaging the internal thread 63 formed in the inner circumferential surface of the housing 62 with the external thread 14 formed in the outer circumferential surface of the valve stem 11. This attaches the valve cap 61 to the valve 10. Further, the pressure detection device 60 is attached to the valve 10.

In a state in which the housing 62 is fastened to the valve stem 11, the first end 12 of the valve stem 11 is in contact with the sealing member 69. The sealing member 69 is pushed by the valve stem 11, such that the spring 86 is contracted. This separates the sealing member 69 from the housing 62. The shaft end 18 is in contact with the contact surface 84. The shaft end 18 is pushed by the pushing portion 80, such that the valve core 15 is open.

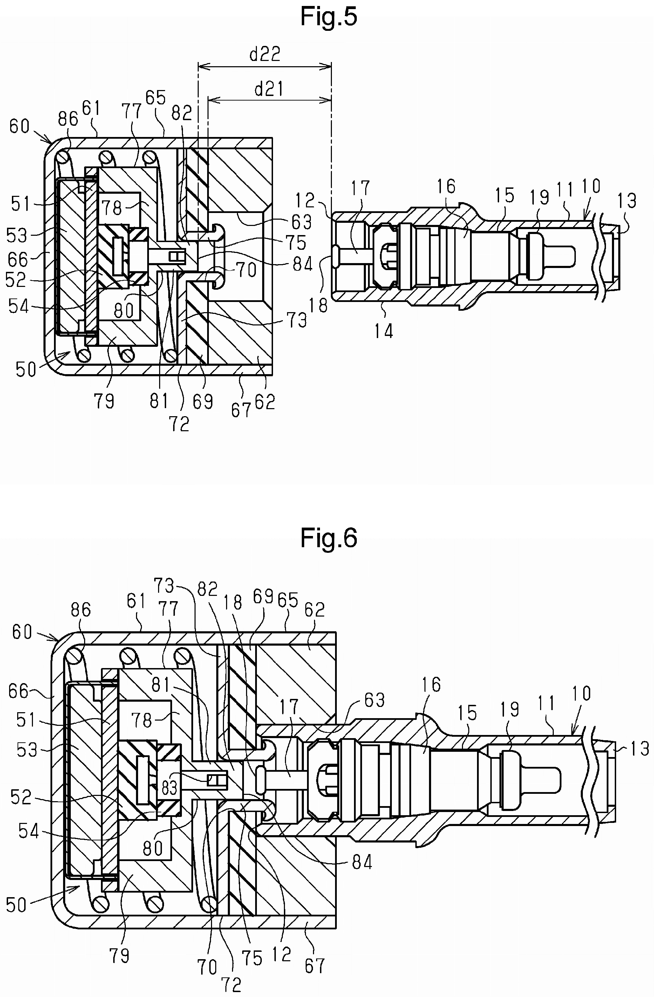

Fig. 5 shows an example of a state in which the first end 12 of the valve stem 11 is aligned with the housing 62 in the axial direction of the valve stem 11 before the housing 62 is fastened to the valve stem 11. In this example, the axial direction of the valve stem 11 coincides with the axial direction of the housing 62. In a state before the housing 62 is fastened to the valve stem 11, the spring 86 biases the holder 72 and the sealing member 69, which is held by the holder 72, toward the housing 62. Since the valve stem 11 is aligned with the housing 62, the spring 86 biases the holder 72 and the sealing member 69, which is held by the holder 72, toward the valve stem 11. This forces the sealing member 69 against the housing 62. In this state, a distance d21 from the sealing member 69 to the first end 12 of the valve stem 11 is shorter than a distance d22 from the contact surface 84 to the shaft end 18. A state before the housing 62 is fastened to the valve stem 11 corresponds to a state in which the sealing member 69 is forced against the housing 62.

### [Operation of the Second Embodiment]

In a state before the housing 62 is fastened to the valve stem 11, the distance d21 from the sealing member 69 to the first end 12 of the valve stem 11 is shorter than the distance d22 from the contact surface 84 to the shaft end 18. Therefore, as shown in Fig. 6, when inserting the valve stem 11 into the valve cap 61 by engaging the internal thread 63 with the external thread 14, the sealing member 69 comes into contact with the first end 12 of the valve stem 11 before the contact surface 84 contacts the shaft end 18. The sealing member 69 seals the gap between the valve stem 11 and the housing 62 as the sealing member 69 contacts the first end 12 of the valve stem 11. In this manner, the gap between the valve stem 11 and the housing 62 is already sealed when the pushing portion 80 begins to push the shaft end 18 to open the valve core 15. This avoids gas leakage through the gap between the valve stem 11 and the housing 62 when opening the valve core 15.

### [Advantages of the Second Embodiment]

(2-1) In a state before the housing 62 is fastened to the valve stem 11, the distance d21 from the sealing member 69 to the first end 12 of the valve stem 11 is shorter than the distance d22 from the contact surface 84 to the shaft end 18. The sealing member 69 seals the gap between the valve stem 11 and the housing 62 before the pushing portion 80 begins to push the shaft end 18. Since the gap between the valve stem 11 and the housing 62 is already sealed when the valve core 15 opens, gas will not leak due to opening the valve core 15.

(2-2) The spring 86 compresses the sealing member 69 to provide seal between the valve stem 11 and the housing 62. This avoids a reduction in the compression reaction force of the sealing member 69, thereby maintaining the sealing force of the sealing member 69.

### [Modified Examples]

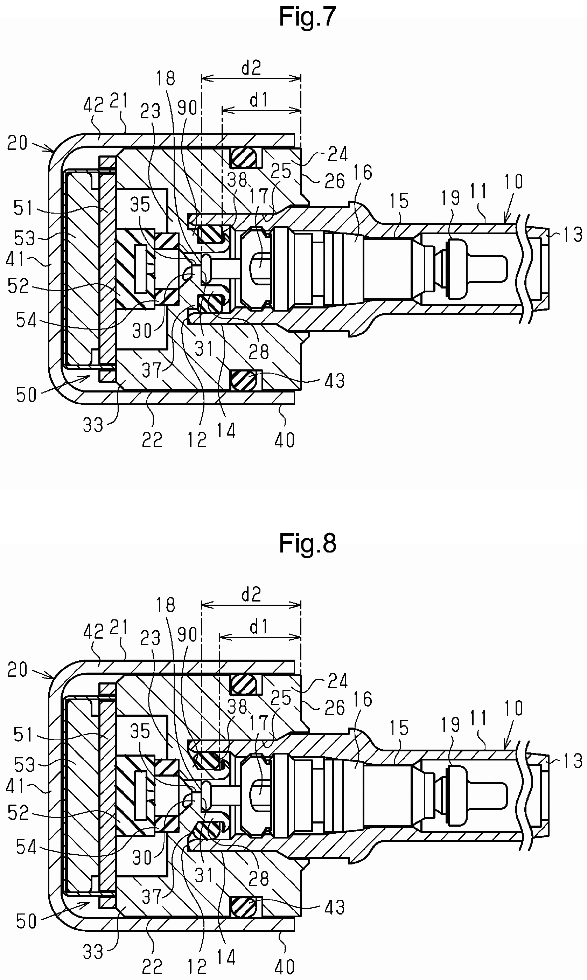

The above embodiments may be modified as described below. The above embodiments and the following modifications can be combined as long as there is no technical contradiction.
- In the first embodiment, the housing 22 may have a structure that allows for adjustment of the position of the sealing member 37. As shown in Figs. 7 and 8, for example, the housing 22 may include a restriction wall 90 that projects from the wall portion 23. For example, the restriction wall 90 extends along the outer circumferential surface of the inner wall 28. The restriction wall 90 restricts movement of the sealing member 37 toward the wall portion 23. As compared to when the restriction wall 90 is not provided, the distal end of the inner wall 28 is closer to the sealing member 37. Further, when the housing 22 is fastened to the valve stem 11, the first end 12 of the valve stem 11 is farther from the sealing member 37. That is, the sealing member 37 may be inserted further into the valve stem 11. A surface of the restriction wall 90 that contacts the sealing member 37 may be flat as shown in Fig. 7 or tapered as shown in Fig. 8.
- In the above embodiments, the valve 10 does not have to be a tire valve. For example, the valve 10 may be a charge valve.
- In the above embodiments, the pressure sensor 52 may be omitted.
- The term "annular" as used in the embodiments may refer to any looped structure, that is, a shape that is endless and continuous, as well as a generally loop-shaped structure, such as a C-shape having a gap. "Annular" shapes include, but are not limited to, a circular shape, an elliptic shape, and a polygonal shape with sharp or rounded corners. The term "tubular" as used in the embodiments may refer to a looped structure, that is, a shape that is endless and continuous. "Tubular" shapes include, but are not limited to, a circular shape, an elliptic shape, and a polygonal shape with sharp or rounded corners.

### REFERENCE SIGNS LIST

10) valve, 11) valve stem, 12) first end, 15) valve core, 18) shaft end, 20) pressure detection device, 21) valve cap, 22) housing, 23) wall portion, 24) outer wall, 26) outer wall end, 28) inner wall, 30) pushing portion, 31) contact surface, 37) sealing member, 52) pressure sensor.

## Claims

1. A pressure detection device configured to be attached to a valve, the valve including a valve stem in which a valve core is accommodated, the pressure detection device comprising:
a housing configured to be fastened to an end of the valve stem;
a pressure sensor configured to detect pressure inside the housing;
a sealing member configured to seal a gap between the valve stem and the housing; and
a pushing portion configured to push a shaft end of the valve core so as to open the valve core, wherein
the housing includes an outer wall configured to cover an outer circumferential surface of the valve stem,
the pushing portion includes a contact surface configured to contact the shaft end, and
in a state in which the end of the valve stem is aligned with the housing in an axial direction of the valve stem before the housing is fastened to the valve stem, a distance from the sealing member to the end of the valve stem is shorter than a distance from the contact surface to the shaft end.

2. The pressure detection device according to claim 1, wherein
the valve includes a tire valve,
the housing includes:
a wall portion configured to contact the end of the valve stem; and
a tubular inner wall projecting from the wall portion toward an interior of the valve stem,
the sealing member is configured to be located between an outer circumferential surface of the inner wall and an inner circumferential surface of the valve stem,
the outer wall includes an outer wall end having an opening that receives the valve stem, and
a distance from the outer wall end to the sealing member is shorter than a distance from the outer wall end to the contact surface.

3. The pressure detection device according to claim 1, further comprising:
a holder holding the sealing member; and
a spring biasing the holder toward the valve stem to slide the holder and the sealing member and force the sealing member against the outer wall,
wherein, in a state in which the sealing member is forced against the outer wall, a distance from the sealing member to the end of the valve stem is shorter than a distance from the contact surface to the shaft end.

4. An attaching structure of a valve cap, the valve cap being configured to be attached to a valve, the valve including a valve stem in which a valve core is accommodated, wherein
the valve cap includes:
a housing configured to be fastened to an end of the valve stem;
a sealing member configured to seal a gap between the valve stem and the housing; and
a pushing portion configured to push a shaft end of the valve core so as to open the valve core,
the housing includes an outer wall configured to cover an outer circumferential surface of the valve stem,
the pushing portion includes a contact surface configured to contact the shaft end, and
in a state in which the end of the valve stem is aligned with the housing in an axial direction of the valve stem before the housing is fastened to the valve stem, a distance from the sealing member to the end of the valve stem is shorter than a distance from the contact surface to the shaft end.
